# EUROPEAN PATENT SPECIFICATION

(11) **EP 3 813 608 B1**
(45) Date of publication and mention of the grant of the patent: **17.12.2025**
(21) Application number: 19745767.4
(22) Date of filing: 28.06.2019
(51) Int. Cl.: A47J 31/52

(54) **METHOD AND APPARATUS FOR PREPARING A BEVERAGE**
VERFAHREN UND GERÄT FÜR DIE ZUBEREITUNG VON GETRÄNKEN
PROCÉDÉ ET APPAREIL DE PRÉPARATION D'UNE BOISSON

(30) Priority: 29.06.2018 IT 201800006832
(43) Date of publication of application: 05.05.2021
(73) Proprietor: CMA Macchine per caffè S.r.l., 31058 Susegana (TV) (IT)
(72) Inventor: ZONELLI, Andrea, 31058 Susegana (TV) (IT)
(74) Representative: Cammareri, Emanuele
(86) International application number: PCT/IB2019/055500
(87) International publication number: WO 2020/003229

(56) References cited:
- EP-A1- 1 839 541
- EP-A1- 3 108 777
- WO-A1-2014/177925
- US-A1- 2016 235 244

## Description

### Field of the invention

The present invention relates to the field of preparation of beverages, and in particular coffee, using brewing machines or apparatuses.

By "brewing", in the present patent application, we mean a machine or apparatus that enables production of a beverage, and in particular coffee, via the passage of a liquid (for example, water), preferably hot and under pressure, through at least one ingredient in powder form, in particular coffee, which is contained in a brewing chamber.

### Prior art

In particular, apparatuses are known provided with a brewing chamber (also known in the art as brewing group or brewing unit), contained in which is a basic substance or ingredient, typically in powder form (such as powdered coffee), for preparing a beverage such as espresso coffee. This substance may be directly placed inside the brewing chamber, or may be contained inside a container, typically in the form of a capsule, pod or similar element.

The apparatus is moreover equipped with a pump and a hydraulic circuit for supplying a pressurised liquid (typically water) to the brewing chamber in order to prepare a beverage.

EP3108777 discloses a method for controlling a dispensing cycle of a coffee machine comprising a pre-infusion step and an infusion step. The pre-infusion step includes a first part and a second part. In the first part, a flow of steeping water is introduced in the brewing chamber comprising a dose of coffee. In the second part, the flow of water is arrested and the ground coffee so as to enable the ground coffee to absorb the water. In the infusion step a flow of infusion water is supplied to the previously steeped dose of ground coffee. The coffee machine automatically sets the pre-infusion step for a subsequent dispensing cycle by means of processing the amount of dose of ground coffee and/or the amount of infusion water dispensed. In the method of EP3108777 the pump is activated with the same velocity in both the first and the second steps.

WO2014/177925 discloses a coffee percolator, wherein the water flow rate and water pressure are controlled both in the infusion and extraction step by a stepping motor driven proportional valve.

US2016/0235244 A1 discloses a machine for the preparation of coffee-based beverages having improved quality which is obtained by means of automatic control of the variable pressure of the water dispensed as a function of the measure of the volume of water dispensed during a dispensing cycle for dispensing a dose of espresso coffee.

EP1839541 A1 discloses a process of preparing a beverage wherein a pump is operated by a control unit according to the time detecting unit in two steps. The beverage preparation apparatus of EP1839541A1 includes a control unit and a valve for interrupting the water flow to the brewing chamber, holding the obtained pressure in the brewing chamber and opening said chamber after a first period of time has lapsed to deliver the prepared beverage. In an embodiment of this prior art document, the water flow can be resumed at the end of said first period of time interval.

It is known to carry out a plurality of checks, for example by monitoring the flow rate of the beverage in real time, in order to modify the operating parameters of the apparatus and optimise the quality of the beverage.

It is moreover known to store, in the apparatus, a plurality of programs, for example associated with different beverages, which contain a plurality of instructions to the various elements of the apparatus itself, so as to modify the operating parameters of the apparatus according to the beverage to be prepared.

It is likewise known to store programs that divide preparation and delivery of a beverage into two steps. In particular, it is known to envisage a first step of pre-brewing of a beverage, in which the heated and preferably pressurised liquid is set in contact with a base substance, typically in powder form, in the brewing chamber, without the beverage being delivered from the chamber itself, and a second step, in which proper delivery of the beverage occurs.

Hence, in general, the quality of the final beverage is a function of the combination of a multiplicity of factors that cannot always be managed in a simple and effective way by a user.

### Summary of the invention

The aim of the present invention is to provide a method and a corresponding apparatus (machine) for preparing beverages that will be simple to implement and that will guarantee a good quality of the final beverage.

The present invention regards in particular a method and an apparatus for preparing beverages according to the independent claims. Preferred aspects and features are specified in the dependent claims.

Hence, one aspect of the present invention regards a method for preparing a beverage, such as coffee, by means of an apparatus comprising: the features of claim 1.

By "configuration" is meant the function that defines the behaviour over time of the supply voltage during the first step or the second step. **In** other words, a configuration associates, for each instant of the corresponding operating step of the apparatus, a value of the supply voltage of the electric motor.

By "at least one trend" is meant that the behaviour of the supply voltage can vary either during the first step or during the second step. For instance, in the first step the voltage may increase slowly for a first period of time and increase more rapidly for a second period of time.

Thanks to the present solution, the flow rate of the liquid that enters the brewing chamber can be controlled in a simple and precise way and can be varied during different steps of delivery of the beverage, according to the needs.

According to one aspect of the present invention, in the apparatus a plurality of pre-defined configurations is stored, from which the first and second configurations for preparing a beverage are chosen.

Thanks to this, it is simple for a user to modify the operating parameters of the apparatus according to his own preferences. In particular, one aspect of the present invention envisages that, prior to the first step, a user selects a first configuration for the first step and a second configuration for the second step so as to obtain a beverage that reflects his tastes.

The apparatus is typically equipped with a purposely provided input device, in the form of pushbuttons, knobs, levers, a touchscreen, etc. As will emerge more clearly from what follows, according to one aspect, the above input device is used to set/select a first configuration for the first step and a second configuration for the second step.

In general, the input device can be operated manually by a user and may comprise an input device to be operated manually, which may be of a physical type, of a digital or virtual type, or of a type that is a combination of these. For instance, an embodiment that comprises a physical manual device may be provided with one or more knobs, pushbuttons, levers, or similar physical means. According to a possible embodiment, a digital or virtual manually operated device may comprise, for example, an image, or icon, which can be displayed on a touch device, for example a touchscreen.

According to a possible embodiment, the position of the input device (whether of a digital type, for example the position detected on a touchscreen, or of a physical type, for example the position of a lever or a knob) can be used for selecting/setting the aforesaid first and second configurations for the first and second steps of delivery of the beverage. For instance, detection of the position of the manual physical or digital input device can be used for increasing/reducing

(and in general modifying), either directly or indirectly, the supply voltage of the motor. For instance, an encoder can be used for detecting the position of a knob or a lever, which can be operated manually by the user. As has been said, according to a possible embodiment, the detection of the position, for example of a knob or a lever, and in general of the input device is used to modify the supply voltage and therefore (possibly storing it during a delivery of the beverage) to be able to then carry out the same operation automatically in one or more subsequent deliveries.

The apparatus may further comprise an element for informing a user of the variation of type of beverage (for example, espresso coffee or coffee of an Americano type) or of amount of beverage (for example, single espresso shot or double espresso shot) according to the different possible configurations. Said element may be digital, for example in the form of a screen, or else the aforesaid information can be written directly on the apparatus.

Furthermore, preferably stored in the apparatus are a plurality of programs, and each program comprises the association of a first configuration for the first step with a second configuration for the second step. The user can thus rapidly select a single program so as to rapidly set the behaviour of the apparatus in the first step and in the second step. These programs may comprise appropriate combinations of configurations for the most common programs, among the different types of one and the same beverage, for example single espresso, double espresso, espresso, Americano, etc., or also among different types of beverages, for example coffee, cappuccino, tea, etc.

According to a possible aspect, not only can the user choose among pre-defined programs, but he can also create a program of his own, or also create a first configuration and/or second configuration of his own. In other words, according to a possible embodiment, the user can set one or more parameters of the first configuration and/or of the second configuration (number and type of trends, duration, etc.) so as to create a personalised program of his own.

According to a possible aspect, a direct or indirect measurement of the amount of liquid (i.e., beverage) delivered from the brewing chamber is carried out, for example by means of a flowmeter or similar sensor known in the art. This measurement can be used to check the amount of beverage delivered both during delivery (i.e., prior to the end of delivery) and at the end of delivery in order to evaluate the total amount of beverage delivered.

The measured value can be compared with a pre-defined value, i.e., an ideal reference value so as to evaluate the quality of delivery. If the value of the amount of liquid (i.e., beverage) delivered differs from the pre-defined value, the apparatus can intervene so as to correct the error. In particular, if the apparatus detects an error during delivery of the beverage, it can initiate a correction step, supplying the electric motor with a supply voltage according to a third configuration so as to compensate for the error detected.

In addition or as an alternative, the apparatus can compare the measured total value of the amount of liquid delivered from the brewing chamber with a pre-defined total value, i.e., a reference value. If a difference is detected between the measured total value and the pre-defined total value, in subsequent operating cycles the first configuration and/or the second configuration are/is changed so as to compensate for the difference, i.e., the error detected. According to a further aspect, within a pre-defined range of supply voltages, a single rotational speed (number of revolutions) of the motor corresponds to a single supply voltage. This enables precise adjustment of the flow rate of the beverage leaving the brewing chamber.

According to a possible aspect, in the first configuration, the value of the supply voltage progressively increases in a preferably constant way. This increase may, for example, be obtained in a plurality of steps or according to a ramp. Other functions (value profiles) with a slope increasing over time (for example, parabolic ) are not ruled out.

The first step, i.e., step i), is preferably carried out for a time comprised between 1 s and 20 s, preferably between 1 s and 7 s, more preferably between 2 s and 5 s.

In the second configuration, the value of the supply voltage remains preferably constant over time.

One aspect of the present invention moreover regards an apparatus programmed and configured for implementing a method according to one or more of the aspects highlighted above.

The apparatus according to the present invention comprises the features of claim 13.

### Brief description of the drawings

Embodiments of the present invention are now described by way of non-limiting example, with reference to the drawings, wherein:

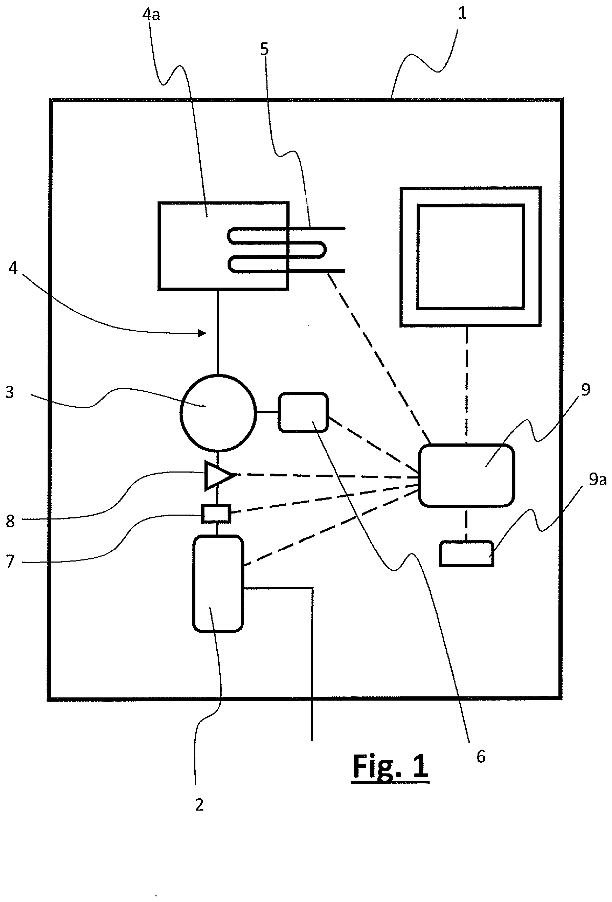

- Figure 1 is a schematic view of an apparatus (machine) according to a possible embodiment of the present invention;
- Figure 2 is a view of a possible operating cycle of the apparatus of Figure 1, in which both the first configuration and the second configuration envisage a single trend of the supply voltage of the electric motor;
- Figure 2A is an enlarged view of a detail of Figure 2;
- Figure 3 is a view of a further possible operating cycle of the apparatus of Figure 1, in which both the first configuration and the second configuration envisage a plurality of trends of the supply voltage of the electric motor; and
- Figure 4 is a view of a further possible operating cycle of the apparatus of Figure 1, in which the apparatus performs a correction step.

### Detailed description of embodiments of the invention

An apparatus or machine 1 for preparing a beverage, preferably coffee, comprises a brewing chamber or group 2, and at least one pump 3, and a hydraulic circuit 4, so as to be able to supply a pressurised liquid (from now on identified as water for convenience, without this implying any loss of generality) to the brewing chamber 2. We shall not dwell on the detailed description of these components in so far as they are known and present in machines (apparatuses) 1 for preparing beverages, and in particular coffee, such as machines for making espresso coffee.

The brewing chamber 2 can be configured so as to contain directly a base substance for preparing a beverage, for example powdered coffee. In this case, the brewing chamber may be provided with one or more pistons for compressing the aforesaid substance within the brewing chamber 2. Alternatively, the brewing chamber 2 may be a housing configured for receiving a purposely provided container or receptacle of a substance for preparing a beverage, for example a cartridge or capsule or pod containing the ingredient for producing the beverage. In this case, brewing takes place within the capsule.

The hydraulic circuit 4 typically comprises a water reservoir 4a. A heater 5 is arranged on the hydraulic circuit 4, upstream or downstream of the pump 3, typically at or in the proximity of the reservoir 4a, or boiler. It should be noted that the apparatus or machine according to the present invention may comprise one or more brewing chambers 2. To each brewing chamber there can be associated its own boiler 4a, or else a single boiler can serve a number of brewing chambers 2.

It should likewise be noted that preferentially a pump 3 (which, as will emerge more clearly from what follows, is provided with the corresponding motor 6) can serve, and hence supply, the brewing liquid (water) to a respective brewing chamber or group 2.

However, not to be ruled out are possible embodiments in which a pump 3 is connected to a number of brewing chambers 2.

An electric motor 6 is connected to (or integrated in) the pump 3. The electric motor 6 is configured so as to be able to receive at input a variable supply voltage V and, consequently, so as to operate the pump 3 so that it will deliver a variable flow rate.

Preferably, moreover, the electric motor 6 is configured so that, within a certain operating range, to each supply voltage V at input to the electric motor 6 there corresponds a rotational speed (number of revolutions) of the motor itself. In this way, when the electric motor 6 is supplied with a certain supply voltage V, it tries to operate the pump 3 so that it will have the same flow rate. This result can be obtained with different components known in the art. Preferably, to obtain this purpose, the electric motor 6 may be a brushless electric motor. The pump 3 is preferably a magnetically driven gear pump.

According to a possible aspect, the apparatus 1 comprises a flowmeter 7, designed to measure, directly or indirectly, the amount of liquid entering or leaving the brewing chamber 2, according to the position of the flowmeter 7, i.e., according to whether it is set, respectively, upstream or downstream of the brewing chamber 2. In general, the flowmeter 7 enables direct or indirect measurement of the amount of beverage delivered from the brewing chamber 2.

The apparatus 1 may further comprise a pressure sensor 8, designed to determine, either directly or indirectly, the pressure in the brewing chamber 2, or in any case in the hydraulic circuit 4, between the pump 3 and the brewing chamber 2. According to one aspect, the pressure sensor 8 can be used for interrupting the operations of the apparatus 1 in the case where malfunctioning causes an excessive increase in the pressure in the hydraulic circuit 4, for example beyond 11 bar or some other pre-set threshold value. According to a preferred aspect of the present invention, the measurement of the pressure determined by the sensor 8 is not used for modifying the voltage of the electric motor 6; namely, it is not used for carrying out a feedback control (e.g., a closed-loop control) of the electric motor 6.

Moreover, according to a preferred aspect of the present invention, the measurement of the pressure made by the pressure sensor 8 is displayed on a screen or some other display device. According to possible embodiments, the value of pressure can be displayed instantaneously and/or can be plotted in a graph in which the variation over time of the value of pressure is displayed. Typically, the apparatus 1 is moreover provided with an input device 10, designed to allow a user to control the apparatus 1, and in particular to control delivery of a beverage by the apparatus 1. Various input devices 10, known in the art, can be used in the apparatus 1 according to the present invention, for example a touchscreen, pushbutton panels, knobs, etc.

The apparatus 1 is moreover typically provided with a control device 9, designed for controlling the various devices/components of the apparatus 1 and exchanging information therewith. A storage unit 9a can be integrated in, or connected to, the control device 9.

The apparatus 1, and in particular the control device 9, is programmed so that the method of preparation and delivery of the beverage will comprise at least two steps. The supply voltage V at input to the electric motor 6 is different between the first step and the second step.

In particular, in the first step, the input supply voltage V of the electric motor follows a first configuration, which is different from the second configuration that the input supply voltage V follows in the second step.

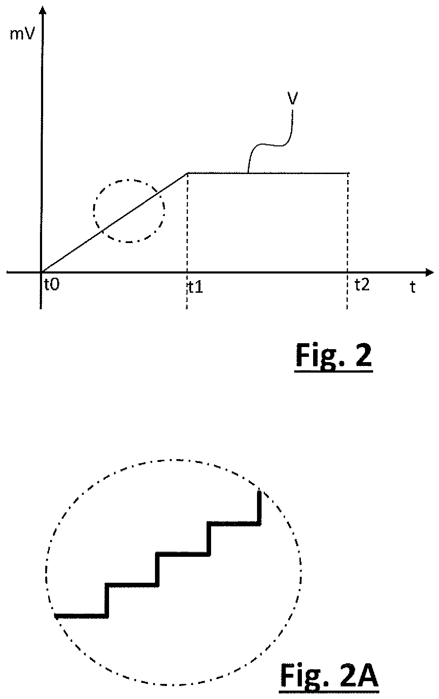

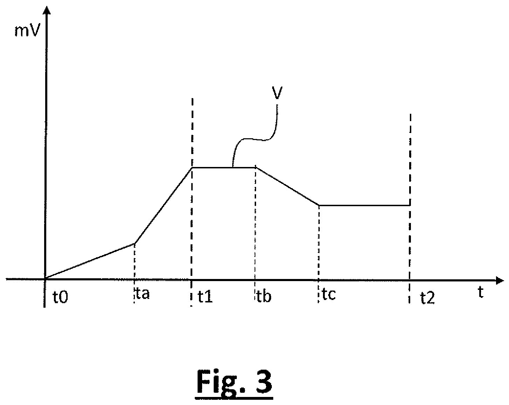

Typically, during the first step, the input supply voltage V progressively increases, for example according to a ramp, and/or a plurality of steps, and/or a parabolic curve, etc. Figures 2 and 3 show a trend of the input supply voltage V during the first step (that occurs between t0 and t1) in the form of ramp. Typically, the ramp is approximated by means of a series of steps that are very close over time. In other words, to approximate the trend of a ramp, the input supply voltage V is increased with small steps (corresponding to gradual increments of the voltage) of short duration. For instance, the duration of each step, i.e., the time that elapses between one step and the next, and hence the time in which the voltage is kept at a first value (first step) before passing to another value (next step), can be measured in tenths or hundredths of a second (for example, 10 hundredths of a second). The increase in height of each step (i.e., the increase in supply voltage V) may be of a few tens of millivolts, for example between 10 and 100 mV. These values may, for example, vary according to the electric motor, the pump, and the hydraulic circuit used in the apparatus 1.

According to a possible aspect, the first step has a pre-set duration, i.e., until the value of the input supply voltage V reaches a pre-defined value, or else lasts for a pre-set time (for example, 3 s).

According to a possible aspect, the user can select by means of the input device 10 (for example, in the form of levers, pushbuttons or sliders, a touchscreen, etc.) the behaviour of the apparatus 1 during the first step, for example by selecting the duration (i.e., the aforementioned pre-set time) of the first step and/or the increase in the voltage of the motor 6 or in the flow rate of the beverage, and/or by selecting of the total amount of beverage to be delivered, etc.

As has been said, according to a possible embodiment, the input device may comprise a knob or a lever that can be operated by the user. As previously discussed, in a preferred embodiment, within an operating range, to each supply voltage V at input to the electric motor 6 there corresponds a rotational speed (number of revolutions) of the motor 6, so that the electric motor will try to operate the pump 3 so as to have a pre-defined flow rate. Hence, according to this aspect, within this operating range, to each value of supply voltage V there corresponds a value of flow rate of the pump. Consequently, the first step, in a way corresponding to what said, can be interrupted when the flow rate of the pump 3 reaches a pre-defined value.

In general, it is preferable for the first step to last for a time comprised between 1 and 20 s, preferably between 1 and 7 s, more preferably between 2 and 5 s.

According to a preferred aspect, the first step corresponds to a pre-brewing step, i.e., a step in which the beverage is not delivered from the brewing chamber, whereas the second step is a step in which the beverage exits from the brewing chamber.

Preferably, but not necessarily, the second configuration of the supply voltage V of the electric motor 6, represented in Figure 2 between the instants t1 and t2, envisages that the input supply voltage V is substantially constant over time. As described above, Figure 2 shows an embodiment in which the supply voltage V follows a single trend (profile) for the first configuration and a single trend for the second configuration.

However, it is possible for the first configuration and/or the second configuration to present a number of different trends, as shown, for example, in Figure 3.

In this embodiment provided by way of non-limiting example, the first step starts at the instant t0 and ends at the instant t1, whereas the second step starts at the instant t1 and ends at the instant t2. The first configuration envisages that the supply voltage has two different trends, from t0 to ta (where ta is the time during the first step in which the trend of the voltage is modified) the supply voltage V increases less rapidly than between ta and t1.

Likewise, the second configuration of the supply voltage V in the second step envisages that the supply voltage V has different trends. In particular, between t1 and tb, and between tc and t2 the supply voltage V is constant over time, with two values different from one another. Between tb and tc the supply voltage V decreases, so as to pass from the first value (i.e., the one between t1 and tb) to the second value (i.e., the one between tc and t2).

Embodiments of the present invention envisage storing in the apparatus 1, typically in the storage unit 9a, a plurality of possible configurations for the first step and for the second step.

In other words, stored in the apparatus 1 are a plurality of possible configurations for the first step and a plurality of possible configurations for the second step.

It should be noted that the storage unit 9a is associated or may be associated with the control device (control unit) 9 of the apparatus 1. **It** should be noted that, according to a possible embodiment, the storage unit 9a may be a removable memory, such as a memory of a USB stick type, which can be connected to the apparatus 1 for preparation of the beverage by means of a purposely provided port or interface.

It should moreover be noted that the plurality of possible configurations for the first step, and a plurality of possible configurations for the second step, and as will emerge hereinafter one or more programs (i.e., the association of a first configuration for the first step with a second configuration for the second step) can be stored in a removable memory, for example available to a technician authorised to operating on the apparatus 1 and transferred onto the internal memory 9a of the apparatus 1.

As mentioned above, according to a possible embodiment, in the apparatus 1 (and typically in said storage unit 9a) also a plurality of programs is stored. Each of these programs comprises at least the association of a first configuration for the first step with a second configuration for the second step.

As has been said, storage can be carried out by means of the input device 10 (whether of a physical type, such as a lever or knob, or of a digital type, for example a touchscreen).

The various programs represent associations of a first configuration with a second configuration that enable preparation of various pre-defined types of beverages. For instance, a first program can be associated with preparation of a single espresso shot, and a second program can be associated with the preparation of a double espresso shot. In this case, typically, the second program (double shot) has a second configuration that envisages a supply voltage V on average higher than that of the first program (single shot). In addition, also the first configuration is different between the two programs. For instance, the first step of the second program (double shot) could be carried out for a period of time longer than that of the first step of the first program (single shot).

There now follows a brief presentation of an example of an apparatus 1 provided with six configurations for the first step and twelve configurations for the second step for preparation of a coffee. For simplicity, described herein is an embodiment in which the configurations for the first and second steps have a single trend, as illustrated in Figure 2.

| First step | |
|---|---|
| Configuration | Voltage variation |
| 1.1 | +30mV/100ms |
| 1.2 | +40mV/100ms |
| 1.3 | +50mV/100ms |
| 1.4 | +60mV/100ms |
| 1.5 | +70mV/100ms |
| 1.6 | +80mV/100ms |

The first step hence has six configurations. The six configurations of the first step envisage an increase by a plurality of steps, close to one another, so as to approximate a ramp, in a way similar to what is illustrated in Figures 2 and 2A. In particular, the first configuration envisages the gentlest ramp; i.e., it envisages an increase of 30 mV every 100 ms, whereas the sixth configuration envisages the steepest ramp, with an increase of the supply voltage of 80 mV every 100 ms.

| Second step (single shot) | |
|---|---|
| Configuration | Voltage (mV) |
| 2.1 | 940 |
| 2.2 | 1190 |
| 2.3 | 1270 |
| 2.4 | 1400 |
| 2.5 | 1540 |
| 2.6 | 1680 |

| Second step (double shot) | |
|---|---|
| Configuration | Voltage (mV) |
| 2.7 | 1260 |
| 2.8 | 1450 |
| 2.9 | 1560 |
| 2.10 | 1690 |
| 2.11 | 1830 |
| 2.12 | 1960 |

As illustrated above, in the present embodiment provided by way of example, the apparatus 1 has twelve possible configurations for the second step of preparation of a coffee, namely six configurations for preparing a single espresso, and six configurations for preparing a double espresso.

Each configuration has a single value of the supply voltage, which is kept constant during the second step, as illustrated in Figure 2.

The apparatus 1 may, moreover, have, stored within it, a plurality of programs that associate a first configuration for the first step with a second configuration for the second step.

For instance, a first program can associate the configuration 1.3 with the configuration 2.4 for preparing a single espresso, whereas a second program can associate the configuration 1.2 with the configuration 2.9 for preparing a double espresso.

The above combination is chosen as program by the user. When the apparatus 1 reaches the end of the first step (the brewing step), the voltage has reached the level (value) required for delivery in the second step. In the absence of different choices made using the input device 10, the apparatus continues delivery according to the program selected.

In general, a user, via the input device 10, is thus able to get the apparatus 1 to carry out one of the pre-defined programs for preparing the beverage chosen.

In addition, according to a possible aspect, using the input device 10, the user can create a personalised program of his own, i.e., associate a first configuration for the first step (which, as anticipated above, corresponds to a pre-brewing step) and a second configuration for the second step (typically the step of delivery of the beverage), according to his own taste. This personalised program could moreover be stored in the machine so that it can be added to the pre-defined programs. Personalisation of the program, and possibly its storage, can for example be carried out by means of an input device of a physical type, such as a lever or knob, or of a digital type, for example a touchscreen, via detection of the position of said input device 10. For instance, the input device 10 can, according to its own position, increase/reduce (and in general modify), directly or indirectly, the supply voltage of the motor.

Furthermore, the user could create not only his own program, by choosing between a first pre-defined configuration and a second pre-defined configuration, but can also create his own personalised configurations for the first and second steps.

For instance, a user could choose, for the first step, the value of supply voltage V to be reached at the end of the first step and the time of duration of said second step. Likewise, the user could choose the duration of the second configuration for the second step, and possibly choose a second configuration that envisages a non-constant trend of the input supply voltage V of the electric motor 6. Moreover, the user V could choose how many and which trends the supply voltage V must follow in each step. The input device 10 is hence preferably equipped with a purposely provided interface (physical, for example by means of pushbuttons or sliders, or virtual, for example on a touchscreen) to allow a user to personalise the steps of preparation and delivery of the beverage, for example personalising the first and second configurations in a similar way to what is illustrated in Figure 3.

It should be noted how the programs and configurations can be selected by, and presented to, the user in different ways. For instance, it is possible to display to a user (as in the tables of the example discussed above) the configurations the programs as a function of the trend of the supply voltage V at input to the electric motor 6.

There are, however, possible embodiments in which the trend of the voltage is chosen in an indirect way. In particular, the user can choose one or more parameters, preferably by means of the input device 10, that are designed to determine the configurations with which the apparatus 1 is to operate. These parameters preferably comprise one or more of the following: duration of the step; value of voltage and/or flow rate at the end of the step; amount of beverage delivered at the end of the step; type of increase; etc. Preferably, among the parameters for enabling a user to define the first step and/or the second step there is at least the time (i.e., the duration) of the step, which the user can preferably select using the input device 10.

For instance, as discussed above, in preferred embodiments, there exists a correspondence between the supply voltage V and the flow rate of the pump 3. The configurations and programs can hence be displayed to a user according to the corresponding trend of the flow rate of the pump 3. With reference to an embodiment corresponding to the example illustrated above, in the first step a user could display six configurations that show six different increases in the flow rate as a function of time (determined by the corresponding increases in the supply voltage of the configurations 1.1 - 1.6), and twelve values of flow rate in the second step (caused by the corresponding values of supply voltage of the configurations 2.1 - 2.12).

There moreover exist possible solutions for choosing the trend of the voltage in an indirect way by selection of one or more parameters, among which the duration of the steps, the value of voltage or flow rate to be reached, the type of increase (constant, parabolic, etc.).

For instance, a user could choose the duration of the steps, and the value of the voltage to be reached therein, possibly by also selecting the type of increase (linear or exponential, e.g. parabolic or cubic).

Alternatively, a user could choose the duration of the steps and the value of the flow rate to be reached.

Alternatively, a user could choose the duration of the steps and the total amount of beverage to be delivered in each of the steps (or the total amount delivered at the end of the corresponding step).

Furthermore, as has been mentioned, the various programs can be associated with types of beverages. Likewise, the configurations can be associated with types of beverages. In addition or as an alternative, programs and configurations can be identified by means of the organoleptic characteristics that are bestowed upon the beverage (a taste that is intense, delicate, bitter, etc.). Hence, in possible embodiments, the programs and configurations could be shown via qualitative terms, i.e., according to the result to be obtained, rather than by the specific parameters. For instance, with reference to the example discussed above, the six configurations 1.1 - 1.6 could be presented to the user as levels of intensity (for example, from 1 to 6) of the organoleptic properties, and likewise the configurations 2.1 - 2.6 could be presented as levels of organoleptic properties of a single espresso shot, and the configurations 2.7 - 2.12 as levels of intensity of organoleptic properties of a double espresso shot. A user could hence, for example, create a personalised program by choosing a first step with intensity "5", and a second step as double espresso with intensity "4" (for example, corresponding to a personalised program obtained by selecting the configurations 1.5 and 2.10, described previously).

**It** should be noted how the solutions described above can be implemented in alternative embodiments, but also in one and the same embodiment. For instance, one and the same machine can allow a user to choose whether to select the first step directly or indirectly so that one and the same machine can, for example, present alternatively the configurations 1.1 - 1.6 for the first step, or by means of different parameters (for example, one or more from among duration of the step, final value of voltage/flow rate, amount of beverage delivered at the end of the step, type of increase, etc.).

Preferably, the apparatus 1 is configured for displaying to a user the selection made, for example by means of a screen, which, as discussed, can also be used as input device 10.

In particular, according to one aspect, the apparatus is configured for displaying to the user, in an indicative way, the behaviour of the flow rate of the beverage as a function of the delivery time. For instance, a screen can display to a user the value of the flow rate (and consequently of the amount) of the beverage as a function of time by means of an X-Y graph.

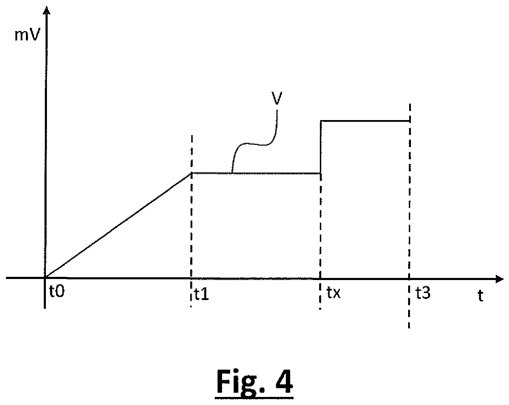

During the step of delivery of the beverage, the apparatus 1 can control the amount of beverage delivered from the brewing chamber. This control is carried out not only at the end of delivery of the beverage (i.e., control of the total amount of beverage delivered), but also in one or more intermediate times, as illustrated in Figure 4, i.e., at a time comprised between start of the preparation of the beverage and end of delivery thereof. This control could also be carried out continuously.

In the embodiment provided by way of example in Figure 4, the apparatus 1 checks, at a time tx (typically during the second step), for example by means of the flowmeter 7, how much beverage has been delivered from the brewing chamber 2.

The apparatus 1 may have, stored therein, the amount of beverage that it should ideally have delivered at time tx. By comparing the pre-defined value (i.e., the aforementioned value of ideal amount) with the value effectively measured (typically by the flowmeter 7), the apparatus can determine whether delivery is carried out in an optimal way. In the case where the apparatus 1 detects a difference between the pre-defined value and the measured value, it can carry out a third step, in which the supply to the electric motor 6 is varied with respect to the second step so as to compensate for the error detected. In other words, the apparatus 1 can supply to the electric motor 6 a supply voltage V according to a third configuration, different from the second configuration. The third configuration is chosen according to the difference between the pre-defined value and the measured value.

In particular, with reference to Figure 4, between t0 and t1 the apparatus has carried out the first step, according to the first configuration of the supply voltage V of the electric motor 6. Subsequently, at time t1, the apparatus 1 has started the second step, by operating the electric motor 6 according to the second configuration of the supply voltage V. During this second step, at time tx, the apparatus has detected that the value of the amount of beverage delivered at time tx is less than the pre-defined value (i.e., than the ideal amount). The apparatus 1 has thus interrupted the second step, and has started a correction step, by increasing the supply voltage V so as to increase the delivery flow-rate of the beverage after the instant tx, so as to compensate for the detected error. In this embodiment, the apparatus 1 has thus varied the configuration of the supply voltage V during delivery of the beverage itself. In addition, or as an alternative, the apparatus 1 can be programmed to measure the total value of the delivered amount of beverage and compare it with a pre-defined total value, i.e., with an ideal value. For instance, with reference to Figure 2, the apparatus 1 can evaluate at time t2 the total value of the amount of beverage delivered and compare it with a pre-defined value. If the measured total value is different from the pre-defined one, the apparatus 1 can modify the first configuration and/or the second configuration of the supply voltage V in a subsequent program, i.e., in a delivery cycle subsequent to the one where an error has been detected.

In use, a user controls delivery of a beverage by the apparatus 1, typically by means of the input device 10. As discussed above, this operation can be carried out in various ways. For instance, a user can choose a pre-defined program that associates a first pre-defined configuration with a second pre-defined configuration of the supply voltage V of the electric motor 6.

In addition, a user could create a personalised program of his own by associating, either directly or indirectly (as discussed above), a first pre-defined configuration with a second pre-defined configuration for the supply voltage V of the electric motor 6.

Furthermore, a user could create, either directly or indirectly, his own first and second configurations for the supply voltage V of the electric motor 6 so as to define in a personalised way the first and second steps of preparation and delivery of the beverage.

Next, the apparatus 1 supplies the electric motor 6 according to the first configuration and, subsequently, according to the second configuration of the supply voltage V of the electric motor 6. Thanks to this, the pump 3 is operated, and pressurised liquid is supplied to the brewing chamber 2 so as to obtain and deliver a beverage.

As anticipated above, according to a possible embodiment, the apparatus 1 can monitor the value of the amount of liquid delivered (i.e., of the beverage delivered) from the brewing chamber. In the case where the apparatus 1 detects an error between a measured value and a pre-defined reference value, it can modify the supply voltage V during delivery, by choosing a third configuration and starting a correction step, or else in a subsequent cycle, i.e., by varying the first configuration and/or the second configuration in a subsequent cycle.

## Claims

1. A method for preparing a beverage by means of an apparatus (1) comprising:
- at least one brewing chamber (2);
- at least one pump (3) and one hydraulic circuit (4) for supplying a pressurised liquid to said brewing chamber (2);
- at least one heater (5) for heating said liquid; and
- at least one electric motor (6) for operating said at least one pump (3),
the method comprising the steps of:
i) supplying a supply voltage (V) to said electric motor (6) according to a first configuration, for a pre-set period of time or until a pre-defined value of said supply voltage (V) is reached, so as to operate said pump (3) and supply said liquid to said brewing chamber (2); and
ii) once said step i) is completed, supplying a supply voltage (V) to said electric motor (6) according to a second configuration, different from said first configuration, so as to operate said pump (3) and supply said liquid to said brewing chamber (2);
wherein said step i) is a pre-brewing step, in which a beverage is not delivered from the brewing chamber (2), and said step ii) is a step of delivery of a beverage from said brewing chamber (2), and wherein said first and second configurations define at least one trend of the supply voltage (V) that is variable or constant over time, and wherein in said first configuration, the value of the supply voltage (V) progressively increases.

2. The method according to claim 1, wherein in said apparatus (1) a plurality of pre-defined configurations is stored, from which said first and second configurations are chosen, preferably
wherein a user selects a first configuration for said step i) and a second configuration for said step ii).

3. The method according to claim 2, wherein the association of the first and second configurations by the user is stored in said apparatus (1).

4. The method according to any one of the preceding claims, wherein in said apparatus (1) a plurality of programs are stored, each program comprising the association of a first configuration for said step i) with a second configuration for said step ii), and wherein a user selects a program from said plurality of programs, preferably
wherein associated with one or more programs are types of beverages.

5. The method according to claim 4, wherein the apparatus receives from a user the selection of a pre-defined program that associates a first pre-defined configuration with a second pre-defined configuration of the supply voltage (V) of the electric motor (6), or
wherein the apparatus receives from a user a personalised program, obtained by associating a first pre-defined configuration with a second pre-defined configuration for the supply voltage (V) of the electric motor (6).

6. The method according to any one of the preceding claims 1 to 4, wherein said first configuration and/or said second configuration are/is defined at least in part by a user, preferably
wherein the apparatus receives from a user parameters for the creation of said first configuration and/or said second configuration, wherein preferably said input parameters comprise at least one of the following: the number of voltage trends, the type of voltage trends, and the duration of the voltage trends for said first configuration and/or said second configuration.

7. The method according to one or more of the preceding claims, wherein the apparatus receives from a user the duration of said step i) and/or of said step ii).

8. The method according to any one of the preceding claims, comprising the step of measuring, either directly or indirectly, the amount of said liquid delivered from said brewing chamber (2), and preferably,
during delivery of said liquid from said brewing chamber (2), said apparatus (1) compares the measured value of the amount of said liquid delivered from said brewing chamber (2) with a pre-defined value, and, if a difference is detected between said measured value and said pre-defined value, a correction step is performed, supplying a supply voltage (V) to said electric motor (6) according to a third configuration, different from said second configuration, so as to compensate for said difference.

9. The method according to claim 8, wherein said apparatus (1) compares the measured total value of the amount of said liquid delivered from said brewing chamber (2) with a pre-defined total value, and, if a difference is detected between said measured total value and said pre-defined total value, the step of changing the first configuration and/or the second configuration of a subsequent delivery is carried out so as to compensate for said difference.

10. The method according to any one of the preceding claims, wherein, within a pre-defined range of supply voltages (V), a rotational speed of the electric motor (6) corresponds to each of the supply voltages (V).

11. The method according to any one of the preceding claims, wherein said step i) lasts until the value of the input supply voltage (V) reaches a pre-defined value, or
wherein said step i) lasts until the value of the flow rate of the pump (3) reaches a pre-defined value.

12. The method according to any one of the preceding claims, wherein, in said second configuration, the value of the supply voltage (V) remains constant over time.

13. An apparatus (1) for preparing a beverage comprising:
- at least one brewing chamber (2);
- at least one pump (3) and one hydraulic circuit (4) for supplying a pressurised liquid to said brewing chamber (2);
- at least one heater for heating said liquid; and
- at least one electric motor (6) for operating said at least one pump (3);
- a control device (9) designed for controlling the various devices/components of the apparatus (1) and exchanging information therewith
**characterised in that** said apparatus (1) being programmed for implementing a method according to one or more of the preceding claims.

## Patentansprüche

1. Verfahren zur Zubereitung eines Getränks mittels einer Vorrichtung (1), umfassend:
- mindestens eine Brühkammer (2);
- mindestens eine Pumpe (3) und einen Hydraulikkreislauf (4) zur Zufuhr einer unter Druck stehenden Flüssigkeit zu der Brühkammer (2);
- mindestens eine Heizvorrichtung (5) zum Erhitzen der Flüssigkeit und;
- mindestens einen Elektromotor (6) zum Betreiben der mindestens einen Pumpe (3), wobei das Verfahren die folgenden Schritte umfasst:
i) Zuführen einer Versorgungsspannung (V) zu dem genannten Elektromotor (6) gemäß einer ersten Konfiguration, für einen vorgegebenen Zeitraum oder bis ein vordefinierter Wert der Versorgungsspannung (V) erreicht ist, um die genannte Pumpe (3) zu betreiben und die genannte Flüssigkeit der Brühkammer (2) zuzuführen;und
ii) nach Abschluss des Schritts i) eine Versorgungsspannung (V) an den genannten Elektromotor (6) gemäß einer zweiten Konfiguration, die sich von der ersten Konfiguration unterscheidet, zuzuführen, um die genannte Pumpe (3) zu betreiben und die genannte Flüssigkeit der genannten Brüheinheit (2) zuzuführen;
wobei der genannte Schritt i) ein Vorbrühen-Schritt ist, in dem eine Getränk nicht aus der Brüheinheit (2) abgegeben wird, und der genannte Schritt ii) ein Schritt zur Abgabe eines Getränks aus der genannten Brüheinheit (2) ist, und wobei die genannten ersten und zweiten Konfigurationen mindestens einen Trend der Versorgungsspannung (V) definieren, der über die Zeit variabel oder konstant ist, und wobei in der genannten ersten Konfiguration der Wert der Versorgungsspannung (V) progressiv ansteigt.

2. Verfahren nach Anspruch 1, wobei in der genannten Vorrichtung (1) eine Vielzahl von vordefinierten Konfigurationen gespeichert ist, aus denen die genannten ersten und zweiten Konfigurationen ausgewählt werden,
wobei vorzugsweise ein Benutzer eine erste Konfiguration für den genannten Schritt i) und eine zweite Konfiguration für den genannten Schritt ii) auswählt.

3. Verfahren nach Anspruch 2, wobei die Zuordnung der ersten und zweiten Konfigurationen durch den Benutzer in der genannten Vorrichtung (1) gespeichert wird.

4. Verfahren nach einem der vorhergehenden Ansprüche, wobei in der genannten Vorrichtung (1) eine Vielzahl von Programmen gespeichert ist, jedes Programm umfassend die Zuordnung einer ersten Konfiguration für den genannten Schritt i) zu einer zweiten Konfiguration für den genannten Schritt ii), und wobei ein Benutzer ein Programm aus der genannten Vielzahl von Programmen auswählt,
wobei vorzugsweise einem oder mehreren Programmen Getränketypen zugeordnet sind.

5. Verfahren nach Anspruch 4, wobei die Vorrichtung von einem Benutzer die Auswahl eines vordefinierten Programms empfängt, das eine erste vordefinierte Konfiguration mit einer zweiten vordefinierten Konfiguration der Versorgungsspannung (V) des Elektromotors (6) zuordnet, oder
wobei die Vorrichtung von einem Benutzer ein personalisiertes Programm empfängt, das durch Zuordnung einer ersten vordefinierten Konfiguration zu einer zweiten vordefinierten Konfiguration für die Versorgungsspannung (V) des Elektromotors (6) erhalten wird.

6. Verfahren nach einem der vorhergehenden Ansprüche 1 bis 4, wobei die genannte erste Konfiguration und/oder die genannte zweite Konfiguration zumindest teilweise von einem Benutzer definiert wird/werden,
wobei vorzugsweise die Vorrichtung von einem Benutzer Parameter für die Erstellung der genannten ersten Konfiguration und/oder der genannten zweiten Konfiguration empfängt, wobei vorzugsweise die genannten Eingabeparameter mindestens eines der folgenden umfassen, nämlich die Anzahl der Spannungsverläufe, die Art der Spannungsverläufe und die Dauer der Spannungsverläufe für die genannte erste Konfiguration und/oder die genannte zweite Konfiguration.

7. Verfahren nach einem oder mehreren der vorhergehenden Ansprüche, wobei die Vorrichtung von einem Benutzer die Dauer des genannten Schritts i) und/oder des genannten Schritts ii) empfängt.

8. Verfahren nach einem der vorhergehenden Ansprüche, umfassend den Schritt des Messens, entweder direkt oder indirekt, der Menge des genannten Flüssigkeits, das aus der genannten Brüheinheit (2) abgegeben wird, und vorzugsweise, während der Abgabe des genannten Flüssigkeits aus der genannten Brüheinheit (2), die genannte Vorrichtung (1) den gemessenen Wert der Menge des genannten Flüssigkeits, das aus der genannten Brüheinheit (2) abgegeben wird, mit einem vordefinierten Wert vergleicht, und falls ein Unterschied zwischen dem gemessenen Wert und dem vorgegebenen Wert festgestellt wird, wird ein Korrekturschritt durchgeführt, bei dem eine Versorgungsspannung (V) gemäß einer dritten Konfiguration, die sich von der zweiten Konfiguration unterscheidet, an den Elektromotor (6) angelegt wird, um diesen Unterschied auszugleichen.

9. Verfahren nach Anspruch 8, wobei die genannte Vorrichtung (1) den gemessenen Gesamtwert der Menge des genannten Flüssigkeits, das aus der Brüheinheit (2) abgegeben wird, mit einem vordefinierten Gesamtwert vergleicht und, wenn eine Differenz zwischen dem genannten gemessenen Gesamtwert und dem genannten vordefinierten Gesamtwert festgestellt wird, wird der Schritt der Änderung der ersten Konfiguration und/oder der zweiten Konfiguration einer nachfolgenden Abgabe durchgeführt, um diesen Unterschied auszugleichen.

10. Verfahren nach einem der vorhergehenden Ansprüche, wobei innerhalb eines vorgegebenen Bereichs von Versorgungsspannungen (V) jeweils eine Drehzahl des Elektromotors (6) der jeweiligen Versorgungsspannung (V) entspricht.

11. Verfahren nach einem der vorhergehenden Ansprüche, wobei der Schritt i) andauert, bis der Wert der angelegten Versorgungsspannung (V) einen vorgegebenen Wert erreicht, oder
wobei der Schritt i) andauert, bis der Durchflusswert der Pumpe (3) einen vorgegebenen Wert erreicht.

12. Verfahren nach einem der vorhergehenden Ansprüche, wobei in der zweiten Konfiguration der Wert der Versorgungsspannung (V) über die Zeit konstant bleibt.

13. Vorrichtung (1) zur Zubereitung eines Getränks, umfassend:
- mindestens eine Brühkammer (2);
- mindestens eine Pumpe (3) und einen Hydraulikkreislauf (4) zur Zuführung einer unter Druck stehenden Flüssigkeit zu der Brühkammer (2);
- mindestens ein Heizelement zum Erhitzen der Flüssigkeit; und
- mindestens einen Elektromotor (6) zum Antrieb der mindestens einen Pumpe (3);
- eine Steuereinheit (9), die zum Steuern der verschiedenen Vorrichtungskomponenten (1) und zum Informationsaustausch mit diesen ausgelegt ist,
**dadurch gekennzeichnet, dass** die Vorrichtung (1) so programmiert ist, dass sie ein Verfahren gemäß einem oder mehreren der vorhergehenden Ansprüche ausführt.

## Revendications

1. Procédé de préparation d'une boisson à l'aide d'un appareil (1) comprenant :
- au moins une chambre d'infusion (2) ;
- au moins une pompe (3) et un circuit hydraulique (4) permettant d'envoyer du liquide sous pression dans ladite chambre d'infusion (2) ;
- au moins un dispositif de chauffage (5) permettant de chauffer ledit liquide ; et
- au moins un moteur électrique (6) permettant de faire fonctionner ladite au moins une pompe (3), le procédé comprenant les étapes consistant à :
i) fournir une tension d'alimentation (V) audit moteur électrique (6) selon une première configuration, pendant une période de temps prédéfinie ou jusqu'à ce qu'une valeur prédéfinie de ladite tension d'alimentation (V) soit atteinte, de manière à actionner ladite pompe (3) et à envoyer ledit liquide dans ladite chambre d'infusion (2) ; et
ii) une fois ladite étape i) terminée, à fournir une tension d'alimentation (V) audit moteur électrique (6) selon une deuxième configuration, différente de ladite première configuration, de manière à actionner ladite pompe (3) et à envoyer ledit liquide dans ladite chambre d'infusion (2) ;
où ladite étape i) est une étape de pré-infusion, dans laquelle une boisson n'est pas distribuée à partir de la chambre d'infusion (2), et où ladite étape ii) est une étape de distribution d'une boisson à partir de ladite chambre d'infusion (2), et où lesdites première et deuxième configurations définissent au moins une tendance de la tension d'alimentation (V) qui est variable ou constante au cours du temps, et où, dans ladite première configuration, la valeur de la tension d'alimentation (V) augmente progressivement.

2. Procédé selon la revendication 1, **caractérisé en ce que** dans ledit appareil (1) sont stockées une pluralité de configurations prédéfinies, parmi lesquelles sont choisies lesdites première et deuxième configurations, de préférence dans lequel un utilisateur sélectionne une première configuration pour ladite étape i) et une deuxième configuration pour ladite étape ii).

3. Procédé selon la revendication 2, **caractérisé en ce que** l'association des première et deuxième configurations par l'utilisateur est stockée dans ledit appareil (1).

4. Procédé selon l'une quelconque des revendications précédentes, **caractérisé en ce que** dans ledit appareil (1) sont stockés une pluralité de programmes, chaque programme comprenant l'association d'une première configuration pour ladite étape i) avec une deuxième configuration pour ladite étape ii), et **en ce qu'**un utilisateur sélectionne un programme parmi ladite pluralité de programmes, de préférence dans lequel des types de boissons sont associés à un ou plusieurs programmes.

5. Procédé selon la revendication 4, **caractérisé en ce que** l'appareil reçoit d'un utilisateur la sélection d'un programme prédéfini qui associe une première configuration prédéfinie à une deuxième configuration prédéfinie de la tension d'alimentation (V) du moteur électrique (6), ou **en ce que** l'appareil reçoit d'un utilisateur un programme personnalisé, obtenu en associant une première configuration prédéfinie à une deuxième configuration prédéfinie pour la tension d'alimentation (V) du moteur électrique (6).

6. Procédé selon l'une quelconque des revendications 1 à 4 précédentes, **caractérisé en ce que** ladite première configuration et/ou ladite deuxième configuration sont définies au moins en partie par un utilisateur, de préférence dans lequel l'appareil reçoit d'un utilisateur des paramètres pour la création de ladite première configuration et/ou de ladite deuxième configuration, dans lequel, de préférence, lesdits paramètres d'entrée comprennent au moins l'un des éléments suivants : le nombre de tendances de tension, le type de tendances de tension et la durée des tendances de tension pour ladite première configuration et/ou ladite deuxième configuration.

7. Procédé selon une ou plusieurs des revendications précédentes, **caractérisé en ce que** l'appareil reçoit d'un utilisateur la durée de ladite étape i) et/ou de ladite étape ii).

8. Procédé selon l'une quelconque des revendications précédentes, comprenant l'étape consistant à mesurer, directement ou indirectement, la quantité dudit liquide distribué par ladite chambre d'infusion (2), et de préférence, pendant la distribution dudit liquide à partir de ladite chambre d'infusion (2), ledit appareil (1) comparant la valeur mesurée de la quantité dudit liquide distribué à partir de ladite chambre d'infusion (2) à une valeur prédéfinie, et, si une différence est détectée entre ladite valeur mesurée et ladite valeur prédéfinie, une étape de correction est effectuée, fournissant une tension d'alimentation (V) audit moteur électrique (6) selon une troisième configuration, différente de ladite deuxième configuration, de manière à compenser ladite différence.

9. Procédé selon la revendication 8, **caractérisé en ce que** ledit appareil (1) compare la valeur totale mesurée de la quantité dudit liquide distribué à partir de ladite chambre d'infusion (2) à une valeur totale prédéfinie, et, si une différence est détectée entre ladite valeur totale mesurée et ladite valeur totale prédéfinie, l'étape consistant à modifier la première configuration et/ou la deuxième configuration d'une distribution ultérieure est effectuée de manière à compenser ladite différence.

10. Procédé selon l'une quelconque des revendications précédentes, **caractérisé en ce que**, dans une plage prédéfinie de tensions d'alimentation (V), une vitesse de rotation du moteur électrique (6) correspond à chacune des tensions d'alimentation (V).

11. Procédé selon l'une quelconque des revendications précédentes, **caractérisé en ce que** ladite étape i) dure jusqu'à ce que la valeur de la tension d'alimentation d'entrée (V) atteigne une valeur prédéfinie, ou **en ce que** ladite étape i) dure jusqu'à ce que la valeur du débit de la pompe (3) atteigne une valeur prédéfinie.

12. Procédé selon l'une quelconque des revendications précédentes, **caractérisé en ce que**, dans ladite deuxième configuration, la valeur de la tension d'alimentation (V) reste constante au cours du temps.

13. Appareil (1) permettant de préparer une boisson, comprenant :
- au moins une chambre d'infusion (2) ;
- au moins une pompe (3) et un circuit hydraulique (4) permettant d'envoyer du liquide sous pression dans ladite chambre d'infusion (2) ;
- au moins un dispositif de chauffage permettant de chauffer ledit liquide ; et
- au moins un moteur électrique (6) permettant de faire fonctionner ladite au moins une pompe (3) ;
- un dispositif de commande (9) conçu pour commander les différents dispositifs/composants de l'appareil (1) et échanger des informations avec ceux-ci, **caractérisé en ce que** ledit appareil (1) est programmé pour mettre en œuvre un procédé selon une ou plusieurs des revendications précédentes.
